# EUROPEAN PATENT APPLICATION

(11) **EP 1 804 191 A1**
(43) Date of publication of application: **04.07.2007**
(21) Application number: 06077241.5
(22) Date of filing: 28.12.2006
(51) Int. Cl.: G06K 7/00, H04B 1/69

(54) **Method for accessing air-channel in mobile RFID system and method for partitioning tag zone using the same**

(30) Priority: 31.12.2005 KR 20050136294
(71) Applicant: U-Comm Technology, Songbuk-Gu, Seoul 136-702 (KR)
(72) Inventor: Park, Jun Seok, Seoul Korea 121-210 (KR)
(74) Representative: Müller, Wolfram Hubertus

(57) **Abstract**

A method for accessing an air-channel in a mobile RFID system and a method for partitioning tag zones using the same are disclosed. In accordance with the methods of the present invention, a collision between mobile RFID readers generated due to a plurality of tags in a single RFID zone is prevented via an arbitration and an interference between the RFID readers in an adjacent tag zone is resolved using a frequency hopping.

## Description

### BACKGROUND OF THE INVENTION

### FIELD OF THE INVENTION

The present invention relates to a method for accessing an air-channel in a mobile RFID system and a method for partitioning tag zones using the same, and in particular to a method for accessing an air-channel in a mobile RFID system and a method for partitioning tag zones using the same for preventing a collision between mobile RFID readers generated due to a plurality of tags in a single RFID zone via an arbitration and resolving an interference between the RFID readers in an adjacent tag zone using a frequency hopping.

### DESCRIPTION OF PRIOR ART

A current applicable technical field of an RFID system includes, in an aspect of spreading the system and service and generating an added value, an SCM (Supply Chain Management), a TM (Traceability Management), an AM (Asset Management) and a PM (Production Management). Particularly, an RFID service supporting a reader-tag communication wherein a plurality of tags and readers may be simultaneously accessed is at a center of an attention. An effort is focused on a development of a RFID system using a UHF band of 433 MHz or 900 MHz and related technologies that may provide relatively wide recognition range compared to a RFID service using a band of 135 KHz or 13.56 MHz in an aspect of a RFID service.

Currently, the 433MHz RFID service of the UHF band RFID service which employs an active tag is mainly used in a field of an application service for managing container boxes and baggages. The 900MHz RFID service is mainly used in an SCM application in stationery reader and handheld reader environments based on various standards such as ISO 18000-6 Type A/B, EPC C1 and C1-Gen2. In addition, various experiment services and businesses of the 900MHz RFID system for building an application environment are in progress internationally and domestically.

Particularly, while the wide recognition range of the 900MHz RFID reader-tag system allows various application service, the 900MHz RFID reader-tag system is disadvantageous in that limitations such as an interference with a different wireless communication such a 900MHz cellular communication, and an interference and a collision between readers in a multi-reader environment effects a technical reference and system performance. Currently, the disadvantage of the 900MHz RFID reader-tag system employing the stationary reader is to be overcome by establishing a spectrum mask about the RFID frequency band. The interference and the collision between the readers in the multi-reader environment that cannot be solved by the spectrum mask cause a serious disadvantage such as a degradation of a recognition rate of the reader and a system malfunction.

However, in case of the mobile RFID service environment, a conventional channel access method for overcoming the disadvantage of the 900MHz RFID system that is developed based on the stationary reader environment cannot be applied to the mobile RFID service environment due to an arbitrariness of the mobile RFID service environment. The mobile RFID technology is a technology integrating the RFID technology with a mobile communication network for obtaining or generating an information by recognizing the information from the RFID tag attached to an object using a mobile phone carried by an individual.

Since a frequency band of the mobile RFID system is similar to the mobile communication network which is 900MHz band, the mobile RFID system is vulnerable to a frequency interference. Moreover, since arbitrary mobile phones connect to the tag in the mobile RFID environment, controlling the frequency interference is very important factor. A standardization of the RFID reader integrated with a portable mobile communication device is in progress being lead by mRF (mobile RFID Forum) and TTA.

However, in an environment wherein various RFID readers are used with the mobile RFID reader by a plurality of users in the same area, an output RF power of the mobile RFID reader is 23dBm based on an ERP which is smaller than 30dBm of the stationary reader and a portable reader. Moreover, since the stationary reader has an antenna gain of 6dBi, a serious interference may occur when the mobile RFID reader accesses the tag in a same area as the stationary reader or the portable reader considering that the antenna gain of the mobile device is typically 0dBi.

### SUMMARY OF THE INVENTION

It is an object of the present invention to provide an isolated tag zone environment so that a tag is not affected by a reader in an adjacent tag zone so as to carry out a channel access suitable for a mobile RFID environment by integrating a frequency hopping technology and a LBT (Listen Before Talking) technology prior to the channel access.

It is another object of the present invention to provide a method for accessing an air channel of an RFID reader included in a mobile device and a method for partitioning a plurality of tag zones in the mobile RFID system that may control an frequency interference when a plurality of readers connect to an RFID tag.

It is another object of the present invention to provide a method for partitioning a plurality of tag zones in a mobile RFID system that solves a collision of the reader generated in the same RFID tag zone through an reader arbitration, and restrains an interference with a reader in adjacent tag zone through a frequency hopping.

In order to achieve above-described objects of the present invention, there is provided a method for accessing an air channel of an RFID reader included in a mobile device, the method comprising steps of: (a) carrying out a reader arbitration for the RFID reader in order to prevent an collision of the reader generated by a tag of an RFID zone; and (b) carrying out a frequency hopping in order to prevent an interference with a reader in an adjacent RFID zone.

It is preferable that the step (a) comprises: (a-1) carrying out a channel monitoring for the arbitration for the RFID reader prior a channel access; (a-2) repeatedly executing a preamble-CMD-CW for a round operation during a channel occupation period; and (a-3) monitoring a status of a channel to be hopped prior to the frequency hopping in order to extend the round operation to a next channel occupation period.

Preferably, each of the monitoring in the steps (a-1) and (a-3) is based on an asynchronous reader environment wherein the corresponding channel is selected within the reader.

Preferably, each of the monitoring in the steps (a-1) and (a-3) is based on a synchronous reader environment wherein the corresponding channel is selected according to a random sequence provided by an RFID server connected via a network.

In order to achieve above-described objects of the present invention, there is provided a method for accessing an air channel of an RFID reader included in a mobile device, the method comprising steps of: (a) carrying out a channel monitoring for a reader arbitration for the RFID reader prior a channel access; (b) repeatedly executing a preamble-CMD-CW for a round operation during a channel occupation period; (c) monitoring a status of a channel to be hopped prior to a frequency hopping in order to extend the round operation to a next channel occupation period; and (d) carrying out the frequency hopping in order to prevent an interference with a reader in an adjacent RFID zone.

Preferably, each of the monitoring in the steps (a) and (c) is based on an asynchronous reader environment wherein the corresponding channel is selected within the reader.

Preferably, each of the monitoring in the steps (a) and (c) is based on a synchronous reader environment wherein the corresponding channel is selected according to a random sequence provided by an RFID server connected via a network.

In order to achieve above-described objects of the present invention, there is provided a method for partitioning a plurality of tag zones in a mobile RFID system, the method comprising steps of: (a) dividing a area including a plurality of tags and a plurality of readers into first and second tag zones; (b) carrying out a communication between the plurality of tags and the plurality of readers in the first tag zone via a channel monitoring prior to a channel access; (c) carrying out a communication between the plurality of tags and the plurality of readers in the second tag zone via the channel monitoring prior to the channel access; and (d) carrying out a communication between the plurality of readers in the first tag zone and the plurality of readers in the second tag zone by a frequency hopping.

### BRIEF DESCRIPTION OF THE DRAWINGS

Fig. 1 is a diagram illustrating a mobile RFID system wherein a method for accessing an air-channel in a mobile RFID system and a method for partitioning tag zones using the same are applied in accordance with the present invention.
Fig. 2 is a diagram illustrating an anti-collision and arbitration environment in a mobile RFID zone in accordance with the present invention.
Fig. 3 is a diagram illustrating a flow of an execution of an arbitration and a frequency hopping of an RFID reader in accordance with the present invention.
Fig. 4 is a diagram illustrating a method for partitioning tag zones in accordance with the present invention.

### DETAILED DESCRIPTION OF THE PREFERRED EMBODIMENTS

The present invention will now be described in detail with reference to the accompanied drawings.

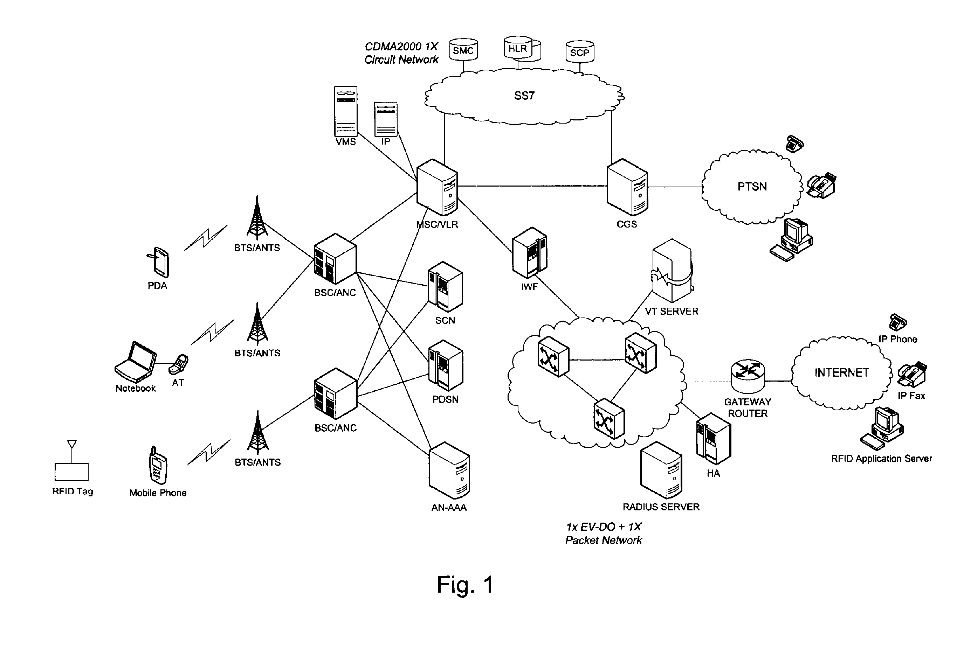

Fig. 1 is a diagram illustrating a mobile RFID system wherein a method for accessing an air-channel in a mobile RFID system and a method for partitioning tag zones using the same are applied in accordance with the present invention.

As shown, an information stored in one of a plurality of RFID tags is provided to an RFID application server via a mobile communication network by a mobile communication terminal including a reader.

The mobile communication network comprises a BSC (Base Station Controller), a BTS (Base Transceiver Station) and a packet network. The packet network is connected to the RFID application server after being connected to an internet through a gateway router. In addition, the mobile communication terminal connected to the BTS comprises an RFID reader. The RFID reader carries out a channel monitoring for a channel occupation in order to access a tag.

Prior to the channel access of the RFID reader, a channel monitoring for a reader arbitration, i.e. a LBT (Listen Before Talking) is carried out. Thereafter, a preamble-CMD-CW is repeatedly executed as a round operation during a channel occupation period. A status of a channel to be hopped is monitored prior to a frequency hopping in order to extend the round operation to a next channel occupation period. Therefore, the reader occupies the channel according to whether an adjacent reader occupies the channel.

In addition, a frequency band that is used in a mobile RFID technology that is applied to the mobile RFID system is similar to that of the mobile communication network (900MHz frequency band).

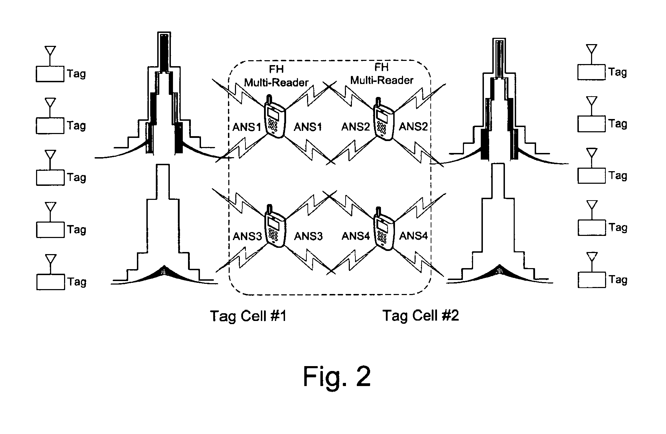

Fig. 2 is a diagram illustrating an anti-collision and arbitration environment in a mobile RFID zone in accordance with the present invention. The mobile RFID zone is to provide a priority to an access of the mobile RFID reader when an interference occurs between a conventional RFID reader and the mobile RFID reader. Preferably, the mobile RFID reader zone is an RFID cell having a diameter of about one meter having a very small coverage centered at the tag. The mobile RFID zone is divided into a plurality of small cells according to an arrangement of the tag, and the arbitration of the readers is required since a plurality of readers may be disposed in each cell. In addition, an interference by the mobile reader that is trying to access an adjacent tag zone may occur since a distance between the cells is very small.

The reader arbitration solves the problem of the interference by the reader in the adjacent tag zone. The reader arbitration is not suitable for the mobile reader environment wherein a plurality of readers exist. Therefore, the interference of the reader in the adjacent tag zone should be solved by a channel sharing through a frequency hopping in the mobile RFID reader environment.

The frequency hopping refers to a technique used to keep two or more RFID readers from interfering with each other while reading the RFID tags. For instance, the RFID reader operates at a frequency between 902 and 928 MHz. The RFID reader may randomly select (or in a predetermined sequence) the frequency between 902 and 928 MHz to communicate with the RFID tag. That is, the RFID reader may select randomly or in a predetermined sequence a frequency channel positioned between 902 and 928 MHz to communicate with the RFID tag.

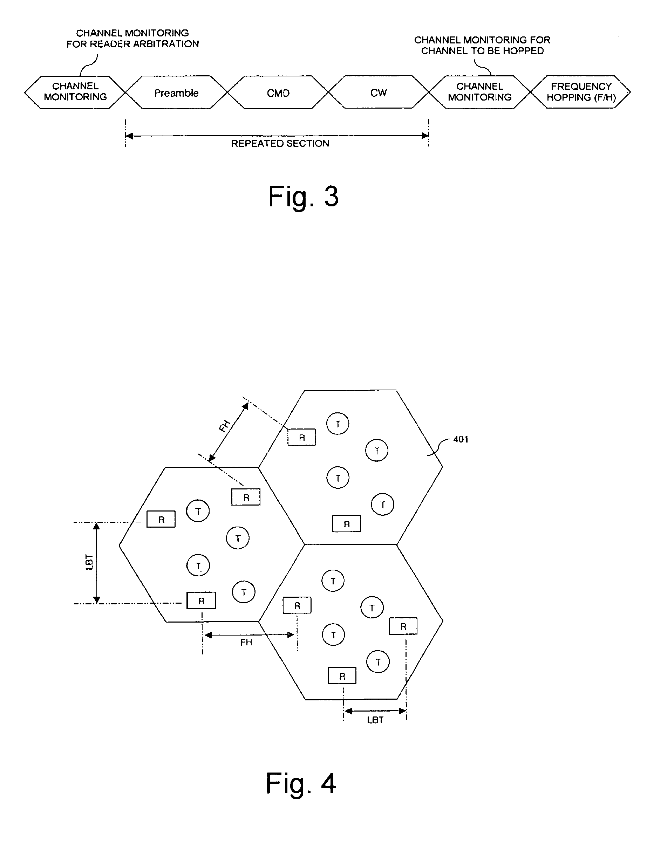

Fig. 3 is a diagram illustrating a flow of an execution of an arbitration and a frequency hopping of an RFID reader in accordance with the present invention.

Referring to Fig. 3, the collision of the readers occurring in the same tag zone is solved by the tag arbitration, and the interference with the reader in the adjacent tag zone is solved through the frequency hopping.

As shown, prior to the channel access, after the mobile RFID reader carries out the LBT (Listen Before Talking), i.e. the channel monitoring for the reader arbitration, the mobile RFID reader repeatedly executes the preamble-CMD-CW which is the round operation during the channel occupation period. The RFID reader then monitors the status of the channel to be hopped prior to the frequency hopping for extending the round operation to the next channel occupation period.

That is, the mobile RFID reader carries out the channel monitoring for the reader arbitration in order to occupy the channel for initially accessing the tag. The RFID reader then occupies an allowed channel. Thereafter, the RFID mobile reader carries out the channel monitoring for hopping to an available channel so as for the next round operation. An anti-collision scheme is carried out through the channel sharing with the reader in the adjacent tag zone, and the arbitration is carried out between the plurality of the reader in the same tag zone such that the collision is prevented even when the plurality of the readers and the tags exist.

Preferably, in carrying out the channel monitoring prior to the channel access, the mobile RFID reader selects a corresponding communication channel within the reader (asynchronous reader environment) or selects the corresponding channel according to a random sequence provided by an RFID server connected via a network (synchronous reader environment).

Using the above-described channel access method for the mobile RFID reader, a communication scheme between the readers in an environment wherein multiple tags and readers exist. For instance, as shown in Fig. 4, a plurality of tag zones 401 wherein a plurality of tags (t) and a plurality of readers (r) exist is formed, and the readers in the same tag zone 401 carries out the channel monitoring, i.e. the LBT prior to the channel access. This scheme prevents the collision of readers in the same tag zone 401.

In addition, the readers in each of the plurality of tag zones carry out the frequency hopping in order to prevent a mutual interference. The frequency hopping prevents the collision between the readers in different tag zones, i.e. a first tag zone and a second tag zone. Accordingly, a area wherein the plurality of the tags and the readers exist is divided into the first and second tag zones via the LBT, and the collision between the readers in the first and the second tag zones is prevented by the frequency hopping.

As described above, in accordance with the method for accessing the air-channel in the mobile RFID system and the method for partitioning the tag zones using the same of the present invention, a key service of a ubiquitous society may be realized by providing the mobile FID environment for controlling the frequency interference in a circumstance wherein the multiple reader included in mobile communication devices access the plurality of the tags.

In addition, in accordance with the present invention, the area wherein the plurality of tags and readers exist may be divided into the plurality of tag zones using the LBT scheme and the frequency hopping such that a design of a communication network for the mobile RFID system is facilitated and a stability of the air-channel access is secured.

While the present invention has been particularly shown and described with reference to the preferred embodiment thereof, it will be understood by those skilled in the art that various changes in form and details may be effected therein without departing from the spirit and scope of the invention.

## Claims

1. A method for accessing an air channel of an RFID reader included in a mobile device, the method comprising steps of:
(a) carrying out a reader arbitration for the RFID reader in order to prevent an collision of the reader generated by a tag of an RFID zone; and
(b) carrying out a frequency hopping in order to prevent an interference with a reader in an adjacent RFID zone.

2. The method in accordance with claim 1, wherein the step (a) comprises:
(a-1) carrying out a channel monitoring for the arbitration for the RFID reader prior a channel access;
(a-2) repeatedly executing a preamble-CMD-CW for a round operation during a channel occupation period; and
(a-3) monitoring a status of a channel to be hopped prior to the frequency hopping in order to extend the round operation to a next channel occupation period.

3. The method in accordance with claim 2, wherein each of the monitoring in the steps (a-1) and (a-3) is based on an asynchronous reader environment wherein the corresponding channel is selected within the reader.

4. The method in accordance with claim 2, wherein each of the monitoring in the steps (a-1) and (a-3) is based on a synchronous reader environment wherein the corresponding channel is selected according to a random sequence provided by an RFID server connected via a network.

5. A method for accessing an air channel of an RFID reader included in a mobile device, the method comprising steps of:
(a) carrying out a channel monitoring for a reader arbitration for the RFID reader prior a channel access;
(b) repeatedly executing a preamble-CMD-CW for a round operation during a channel occupation period;
(c) monitoring a status of a channel to be hopped prior to a frequency hopping in order to extend the round operation to a next channel occupation period; and
(d) carrying out the frequency hopping in order to prevent an interference with a reader in an adjacent RFID zone.

6. The method in accordance with claim 5, wherein each of the monitoring in the steps (a) and (c) is based on an asynchronous reader environment wherein the corresponding channel is selected within the reader.

7. The method in accordance with claim 5, wherein each of the monitoring in the steps (a) and (c) is based on a synchronous reader environment wherein the corresponding channel is selected according to a random sequence provided by an RFID server connected via a network.

8. A method for partitioning a plurality of tag zones in a mobile RFID system, the method comprising steps of:
(a) dividing a area including a plurality of tags and a plurality of readers into first and second tag zones;
(b) carrying out a communication between the plurality of tags and the plurality of readers in the first tag zone via a channel monitoring prior to a channel access;
(c) carrying out a communication between the plurality of tags and the plurality of readers in the second tag zone via the channel monitoring prior to the channel access; and
(d) carrying out a communication between the plurality of readers in the first tag zone and the plurality of readers in the second tag zone by a frequency hopping.
